# EUROPEAN PATENT APPLICATION

(11) **EP 4 831 519 A1**
(43) Date of publication of application: **28.10.2026**
(21) Application number: 24926018.3
(22) Date of filing: 19.02.2024
(51) Int. Cl.: F16K 31/05

(54) **PRESSURE-RESISTANT EXPLOSION-PROOF VALVE ACTUATOR AND METHOD FOR ASSEMBLING PRESSURE-RESISTANT EXPLOSION-PROOF VALVE ACTUATOR**

(71) Applicant: Takatori Seisakusho Co., Ltd., Ukiha-shi, Fukuoka 839-1321 (JP)
(72) Inventor: FUJIYAMA Kojiro, Fukuoka-shi, Fukuoka 813-0034 (JP)
(74) Representative: Isarpatent
(86) International application number: PCT/JP2024/005761
(87) International publication number: WO 2025/177347

(57) **Abstract**

[Object] To provide a compact and lightweight flameproof explosion-proof valve actuator and a method for assembling a flameproof explosion-proof valve actuator, which can be easily retrofitted to a valve provided in a pipe, can motorize the valve, and can be used in an atmosphere in which explosive gas exists.

[Solution Means] A valve actuator 1 has an explosion-proof housing 10 and a valve attaching portion 4. In addition, the explosion-proof housing 10 has a main frame 11 serving as a body which houses an actuator driving portion 3, and a lid portion 100 which closes an upper side of the main frame 11 in a state in which the actuator driving portion 3 is housed. In addition, a plurality of side surface thinning portions 15 are formed on outer peripheral surfaces of each of four side plates 13a, 13b, 13c, and 13d of the main frame 11. The side surface thinning portions 15 have a shape in which notches 150 are formed on a bottom portion side and the side surface thinning portions 15 do not reach upper end edges of the respective side plates.

## Description

### [Technical Field]

The present invention relates to a flameproof explosion-proof valve actuator and a method for assembling a flameproof explosion-proof valve actuator. More specifically, the present invention relates to a compact and lightweight flameproof explosion-proof valve actuator and a method for assembling a flameproof explosion-proof valve actuator, which can be easily retrofitted to a valve provided in a pipe, can motorize the valve, and can be used in an atmosphere in which explosive gas exists.

### [Background Art]

Conventionally, actuators have been widely used as driving sources which convert energy, such as electricity or hydraulic pressure, into mechanical motion and move devices.

In addition, various actuators exist depending on types of operating principles and applications, and a valve actuator which is connected to a valve and opens and closes the valve by a rotational force of a motor has been proposed.

In addition, in pipes of facilities such as chemical plants, power plants, and vessels, numerous valves are used to control fluid flowing through the pipes. To save labor for opening and closing an enormous number of manual valves, there is a strong demand for motorizing manual valves provided in the pipes using valve actuators.

The need for motorizing such manual valves is not limited to cases where new valves are installed, and is considered to increase in the future also for facilities which are already in operation, at the time of maintenance or refurbishment.

On the other hand, in an atmosphere in which explosive gas exists, there is a risk that an explosive gas may be ignited and an explosion may occur due to a failure of an electrically driven actuator. Therefore, an explosion-proof structure needs to be employed, and, for example, adoption of a flameproof explosion-proof structure, which is a type of explosion-proof structure, is considered.

The flameproof explosion-proof structure means a structure in which, even when explosive gas enters a container covering electrical equipment or the like and explodes inside the container, the container withstands the explosion pressure and has no risk of igniting external explosive gas.

In conventional actuators having a flameproof explosion-proof structure, a flameproof explosion-proof structure dedicated to a device using an actuator is constructed in accordance with the device (see, for example, Patent Literature 1).

In addition, in the flameproof explosion-proof structure, a container covering an actuator, a driving portion, or the like is required to have strength which can withstand a maximum explosion pressure occurring when explosive gas which has entered the container explodes. Therefore, a structure is adopted in which flange joint portions, which are provided on respective outer edge portions of a container body and a lid constituting the container and contact each other, have a deep depth, and a wall surface of the container has a large wall thickness. In addition, the container is formed of heavy iron or the like.

### [Citation List]

### [Patent Literature]

### [Patent Literature 1] Japanese Patent No. 7420458 [Summary of Invention]

### [Technical Problems]

However, such a conventional actuator having a flameproof explosion-proof structure dedicated to a device which is an attachment object does not have a structure which can be retrofitted to an existing device, and the entire existing device needed to be replaced. That is, application to cases of subsequent motorization while utilizing a manual valve already installed in a pipe or the like was difficult.

In addition, in a container in a flameproof explosion-proof structure, flange joint portions have a deep depth, a wall surface of the container has a large wall thickness, and the container is formed of a heavy material such as iron. Therefore, the container inevitably becomes large, and the weight becomes large.

For example, inside vessels, chemical plants, or the like, there are locations where a plurality of pipes are densely arranged in a limited narrow space and distances between the pipes are short. At such locations, the distance from an adjacent pipe is short, and securing a space sufficient to arrange a flameproof explosion-proof valve actuator requiring an enlarged container is difficult.

In addition, in order to apply a heavy flameproof explosion-proof valve actuator to a valve on a pipe spanning through midair, a large and robust support structure must be provided around the pipe to prevent deformation or breakage of the pipe due to a load of the weight. However, also in a narrow space where pipes are densely arranged, the support structure cannot be made, and a flameproof explosion-proof structure could not be provided.

The present invention has been made in view of the above points, and an object of the present invention is to provide a compact and lightweight flameproof explosion-proof valve actuator and a method for assembling a flameproof explosion-proof valve actuator, which can be easily retrofitted to a valve provided in a pipe, can motorize the valve, and can be used in an atmosphere in which explosive gas or the like exists.

### [Solution to Problem]

To achieve the above object, the flameproof explosion-proof valve actuator of the present invention includes: an actuator driving portion driven by electricity; a bracket part which is attached to the actuator driving portion, is configured to be rotatable by a driving force of the actuator driving portion, and fits with a handle of a predetermined valve provided in a pipe to open and close the predetermined valve; an explosion-proof housing which covers the actuator driving portion and at least a part of the bracket part, is formed of aluminum, and has a flameproof explosion-proof structure; and a valve attaching portion which is attached to the predetermined valve and supports the explosion-proof housing above the handle. The explosion-proof housing has a housing body which can house the actuator driving portion therein, and a housing lid portion which is attached to a top surface side of the housing body in a state in which the actuator driving portion is housed inside the housing body. A plurality of side surface thinning portions, each of which has a thickness smaller than a thickness of a side surface of the housing body and has a shape in which only an end portion on a bottom portion side is notched, are formed in the side surface of the housing body, and an inner bottom portion of the housing body is configured to have a predetermined thickness.

Here, the actuator driving portion driven by electricity and the bracket part, which is attached to the actuator driving portion, is configured to be rotatable by the driving force of the actuator driving portion, and fits with the handle of the predetermined valve provided in the pipe to open and close the predetermined valve, make it possible to motorize opening and closing of the predetermined valve via the driving force of the actuator driving portion.

In addition, since the explosion-proof housing has a flameproof explosion-proof structure which covers the actuator driving portion and at least a part of the bracket part, the actuator driving portion driven by electricity can be operated under an explosive atmosphere in which explosive gas or the like exists outside. That is, even when an ignition source is generated due to a failure or the like of the actuator driving portion and an explosion occurs inside the explosion-proof housing, the explosion-proof housing can withstand the explosion pressure and can suppress ignition of external explosive gas.

In addition, since the explosion-proof housing is formed of aluminum, the weight of the explosion-proof housing can be easily reduced as compared with a mode in which the explosion-proof housing is formed of a material having a higher density, such as iron.

In addition, since the valve attaching portion is attached to the predetermined valve and supports the explosion-proof housing above the handle, the actuator driving portion, the bracket part, and the explosion-proof housing can be attached to the predetermined valve via the valve attaching portion.

In addition, since the explosion-proof housing has the housing body which can house the actuator driving portion therein and the housing lid portion which is attached to the top surface side of the housing body in a state in which the actuator driving portion is housed inside the housing body, a structure in which the actuator driving portion is covered with the housing body and the housing lid portion can be provided.

In addition, since the plurality of side surface thinning portions having a thickness smaller than a thickness of the side surface are formed in the side surface of the housing body, the weight of the housing body can be reduced while causing the side surface of the housing body to have a certain thickness and ensuring strength required for the flameproof explosion-proof structure. That is, the weight of the entire explosion-proof housing can be reduced, and a load applied to the pipe provided with the predetermined valve can be reduced.

In addition, since the plurality of side surface thinning portions are formed in the side surface of the housing body, have a thickness smaller than a thickness of the side surface, and have a shape in which only the end portion on the bottom portion side is notched, the number of steps in the manufacturing process can be reduced, and the housing body can be easily manufactured. That is, for example, the housing body can be formed by casting in which two molds are matched together. Specifically, since the shape of the side surface thinning portion is a shape in which only the end portion on the bottom portion side is notched with respect to the side surface, the shape is an uneven shape which can be formed by matching two molds, namely a first mold representing a portion corresponding to an upper side of the housing body and a second mold representing a portion corresponding to the bottom portion side of the housing body. For this reason, the housing body can be manufactured by a manufacturing procedure with a relatively small number of required molds and a relatively small number of mold matching steps, namely casting by matching two molds. As a result, manufacturing labor can be reduced, and manufacturing cost can be reduced.

In addition, since the plurality of side surface thinning portions, each of which has a thickness smaller than a thickness of the side surface and has a shape in which only the end portion on the bottom portion side is notched, are formed in the side surface of the housing body, and the inner bottom portion of the housing body has a predetermined thickness, strength required for the flameproof explosion-proof structure can also be ensured on the bottom portion side of the housing body. That is, in the side surface thinning portions formed in the side surface of the housing body, since the end portion on the bottom portion side of the side surface is notched, strength on the bottom portion side becomes small when considered only in terms of the side surface. However, on the inside of the housing body, since the inner bottom portion has a predetermined thickness, a portion having the thickness of the inner bottom portion can cover strength of a portion where a wall thickness on the bottom portion side of the side surface is small. As a result, the bottom portion side of the housing body as a whole can have strength required for the flameproof explosion-proof structure.

In addition, when a cylindrical protruding portion which protrudes downward from the bottom surface and in which a through-hole communicating with the inside of the housing body is formed is provided on the bottom surface of the housing body, a bracket attached to the actuator driving portion can be inserted through the through-hole of the protruding portion, and a lower end of the bracket part can be arranged below the housing body. In addition, the valve attaching portion can be attached to the protruding portion, and a structure in which the explosion-proof housing is supported by the valve attaching portion can be constructed.

In addition, when a plurality of bottom surface thinning portions formed to have a thickness smaller than a thickness of the bottom surface are formed, on the bottom surface of the housing body, in the bottom surface around the protruding portion, the weight of the housing body can be further reduced while causing the bottom surface of the housing body to have a certain thickness and ensuring strength required for the flameproof explosion-proof structure. That is, a structure in which thinning is performed not only in the side surface of the housing body but also in the bottom surface is provided, and the weight of the entire explosion-proof housing can be further reduced, thereby reducing a load applied to the pipe provided with the predetermined valve.

In addition, when the total weight of the actuator driving portion, the bracket part, and the explosion-proof housing is 10 kg or less, the weight of the whole formed of the actuator driving portion, the bracket part, and the explosion-proof housing can be reduced, and a load applied to the pipe provided with the predetermined valve can be further reduced. That is, for example, the weight applied when a worker puts body weight on a valve or pipe to open and close the valve is assumed to be about 10 to 20 kg even when heavy. Therefore, setting the entire weight formed of the actuator driving portion, the bracket part, and the explosion-proof housing to 10 kg or less can sufficiently suppress deformation or breakage of the pipe.

In addition, when the side surface thinning portion is formed in a shape in which the lateral width gradually decreases from the bottom portion side toward an upper side in the side surface of the housing body, a region having a thickness smaller than a thickness of the side surface, that is, a region which is thinned and reduced in weight, can be widely provided on the bottom portion side of the side surface. In addition, since the inner bottom surface of the housing body has a predetermined thickness, strength required for the explosion-proof structure can be ensured even when a wide region which is thinned and reduced in weight is provided on the bottom portion side of the side surface.

In addition, when a plurality of side surface thinning portions are formed at constant intervals on at least one of the side surfaces of the housing body, the side surface thinning portions can be efficiently provided over the entire range of one side surface, and the weight of the housing body can be further easily reduced. In addition, a shape is provided in which portions having a large thickness and portions having a small thickness are evenly provided on one side surface, and the shape has a good balance in terms of difference in thickness, whereby pressure resistance strength can be easily maintained in the entire housing body.

In addition, when the explosion-proof housing has strength which withstands an explosion pressure whose maximum explosion pressure inside the explosion-proof housing is 0.811 MPa or less, the explosion-proof housing has strength required for a sufficient flameproof explosion-proof structure. The value of the maximum explosion pressure of 0.811 MPa is a value of the maximum explosion pressure generated when a mixed gas of hydrogen and air, having a composition in which hydrogen is 30% and air is 70%, explodes. That is, the explosion-proof housing has a structure including strength required as a flameproof explosion-proof structure against explosion in a mixed gas of hydrogen and oxygen.

In addition, when the bottom surface of the housing body has rib portions which partition adjacent bottom surface thinning portions and are formed radially about the protruding portion as a center, pressure resistance strength of the bottom surface of the housing body can be easily improved. In addition, a shape is provided in which portions having a large thickness and portions having a small thickness are evenly provided on the bottom surface of the housing body, and the shape has a good balance in terms of difference in thickness, whereby pressure resistance strength can be easily maintained in the entire housing body.

In addition, the actuator driving portion has: a motor serving as a driving source having a rotary shaft; a first pulley attached to the rotary shaft; a second pulley paired with the first pulley; a belt stretched over the first pulley and the second pulley; a worm portion to which the second pulley is attached; and a worm reduction gear which is arranged orthogonally to the worm portion and has a worm wheel which performs power transmission by gear meshing with the worm portion. When the bracket part is attached to the worm reduction gear, torque can be output from an output of the motor to cause the bracket part to open and close the valve. That is, electric power can be supplied to the motor to motorize the valve.

In addition, when the bracket part fits with the handle of the predetermined valve and is attached to the actuator driving portion, torque obtained from the motor and the worm reduction gear inside the case can be directly transmitted to the handle of the valve. In addition, the entire actuator can be easily reduced in size.

In addition, by means of the first pulley attached to the rotary shaft of the motor, the second pulley which is paired with the first pulley and has a diameter larger than a diameter of the first pulley, and the belt stretched over the first pulley and the second pulley, a rotation speed of the second pulley can be made smaller than a rotation speed of the first pulley, and an output of the motor can be transmitted to the worm reduction gear. That is, not only a reduction ratio of the worm reduction gear but also a reduction ratio corresponding to a size ratio between the diameter of the first pulley and the diameter of the second pulley can be obtained, and high torque can be output from a rotational force of the motor. As a result, a motor having a small output and a small size can be used as the driving source, and the entire actuator can be reduced in size.

In addition, when the actuator driving portion has the case, members such as the motor constituting the actuator driving portion can be housed in the case to form one structural body. In addition, by housing the case in the explosion-proof housing, not only can the actuator driving portion be arranged, but also the internal space of the explosion-proof housing can be filled with the case, and a space into which explosive gas can enter inside the explosion-proof housing can be reduced.

In addition, to achieve the above object, the method for assembling a flameproof explosion-proof valve actuator of the present invention includes: a casting step of casting a housing body by matching a first mold and a second mold and pouring aluminum, the housing body being a box-shaped body capable of housing an actuator driving portion driven by electricity therein, and having, on a side surface of the housing body, a plurality of side surface thinning portions, each of which has a thickness smaller than a thickness of the side surface and has a shape in which only an end portion on a bottom portion side is notched; a housing step of housing the actuator driving portion in the housing body cast in the casting step, and attaching a lid portion to a top surface of the housing body to construct an explosion-proof housing having a flameproof explosion-proof structure; and an arrangement step of arranging, on a handle of a predetermined valve provided in a pipe, a bracket part which rotates by a driving force of the actuator driving portion, and arranging the explosion-proof housing above the handle via a valve attaching portion.

Here, since the plurality of side surface thinning portions, each of which has a thickness smaller than a thickness of the side surface and has a shape in which only the end portion on the bottom portion side is notched, are formed in the side surface of the housing body, the weight of the housing body can be reduced while causing the side surface of the housing body to have a certain thickness and ensuring strength required for the flameproof explosion-proof structure. That is, the weight of the entire explosion-proof housing can be reduced, and a load applied to the pipe provided with the predetermined valve can be reduced.

In addition, in the casting step, by casting the housing body, in which the plurality of side surface thinning portions, each of which has a thickness smaller than a thickness of the side surface and has a shape in which only the end portion on the bottom portion side is notched, are formed on the side surface of the housing body, by matching the first mold and the second mold and pouring aluminum, the housing body can be manufactured with a small number of steps. That is, the housing body can be formed by casting in which two molds are matched together. Specifically, since the shape of the side surface thinning portion is a shape in which only the end portion on the bottom portion side is notched with respect to the side surface, the shape is an uneven shape which can be formed by matching two molds, namely a first mold representing a portion corresponding to an upper side of the housing body and a second mold representing a portion corresponding to the bottom portion side of the housing body. For this reason, the housing body can be manufactured by a manufacturing procedure with a relatively small number of required molds and a relatively small number of mold matching steps, namely casting by matching two molds. As a result, manufacturing labor can be reduced, and manufacturing cost can be reduced.

In addition, in the housing step, by housing the actuator driving portion in the housing body cast in the casting step and attaching the lid portion to the top surface of the housing body to construct the explosion-proof housing having a flameproof explosion-proof structure, a structure in which the actuator driving portion is covered with the housing body and the housing lid portion and the actuator driving portion is arranged inside the explosion-proof housing can be provided.

In addition, in the arrangement step, by arranging, on the handle of the predetermined valve provided in the pipe, the bracket part which rotates by the driving force of the actuator driving portion, and arranging the explosion-proof housing above the handle via the valve attaching portion, the actuator driving portion, the bracket part, and the explosion-proof housing can be attached to the predetermined valve, and the valve can be motorized.

In addition, when the predetermined valve is an existing valve provided in the pipe, the actuator driving portion covered with the explosion-proof housing can be attached to the existing valve, and the existing valve can be retrofitted and motorized.

### [Advantageous Effects of Invention]

The flameproof explosion-proof valve actuator according to the present invention can be easily retrofitted to a valve provided in a pipe, can motorize the valve, can be used in an atmosphere in which explosive gas or the like exists, and is compact and lightweight. In addition, the method for assembling a flameproof explosion-proof valve actuator according to the present invention is a method which enables assembly of a compact and lightweight flameproof explosion-proof valve actuator which can be easily retrofitted to a valve provided in a pipe, can motorize the valve, and can be used in an atmosphere in which explosive gas or the like exists.

### [Brief Description of Drawings]

FIG. 1 FIG. 1 is a schematic descriptive view showing a valve to which a valve actuator, which is an example of the valve actuator according to the present invention, is attached.
FIG. 2 FIG. 2 is a schematic perspective view showing the overall structure of the explosion-proof housing and the valve attaching portion.
FIG. 3 FIG. 3 is a schematic perspective view showing a gear case of the actuator driving portion.
FIG. 4 FIG. 4(a) is a schematic perspective view showing a main frame of the explosion-proof housing, and FIG. 4(b) and FIG. 4(c) are schematic perspective views showing lid portions of the explosion-proof housing.
FIG. 5 FIGS. 5(a) to (d) are schematic views showing four side plates of the main frame.
FIG. 6 FIG. 6 is a schematic view showing a bottom surface of the main frame.
FIG. 7 FIGS. 7 are views showing the internal structure of the gear case as viewed from above the actuator driving portion, where FIG. 7(a) is a schematic perspective view and FIG. 7(b) is a schematic plan view.
FIG. 8 FIG. 8 is a schematic cross-sectional view showing the bracket part and a peripheral structure of the bracket part.
FIG. 9 FIG. 9 is a schematic perspective view showing a positional relationship between the bracket part and the valve attaching portion and a structure of the valve attaching portion.
FIG. 10 FIG. 10 is a schematic process diagram showing steps of attaching the valve actuator to a manual valve, where FIG. 10(a) is a schematic view showing a structure of the manual valve serving as an attachment object, and FIGS. 10(b) and (c) are schematic views showing attachment of the stand portion.
FIG. 11 FIG. 11 is a schematic process diagram which, continuing from FIG. 10, shows steps of attaching the valve actuator to the manual valve, where FIG. 11(a) is a schematic view showing attachment of the adapter and the mounting plate to the protruding portion, FIG. 11(b) is a schematic view showing a state in which the position of the explosion-proof housing and the position of the stand portion are aligned, and FIG. 11(c) is a schematic view showing a state in which attachment of the explosion-proof housing to the valve has been completed.
FIG. 12 FIG. 12(a) is a schematic view showing a valve actuator having an explosion-proof housing in which honeycomb-shaped thinning portions are formed in a side surface, and FIG. 12(b) is a schematic view showing a valve actuator having an explosion-proof housing in which closed rectangular thinning portions and rectangular thinning portions whose bottom surface side is notched are formed in a side surface.

### [Description of Embodiments]

Hereinafter, embodiments of the present invention will be described to facilitate understanding of the present invention.

The present inventors conducted the following studies in order to construct a compact and lightweight flameproof explosion-proof valve actuator having a flameproof explosion-proof structure.

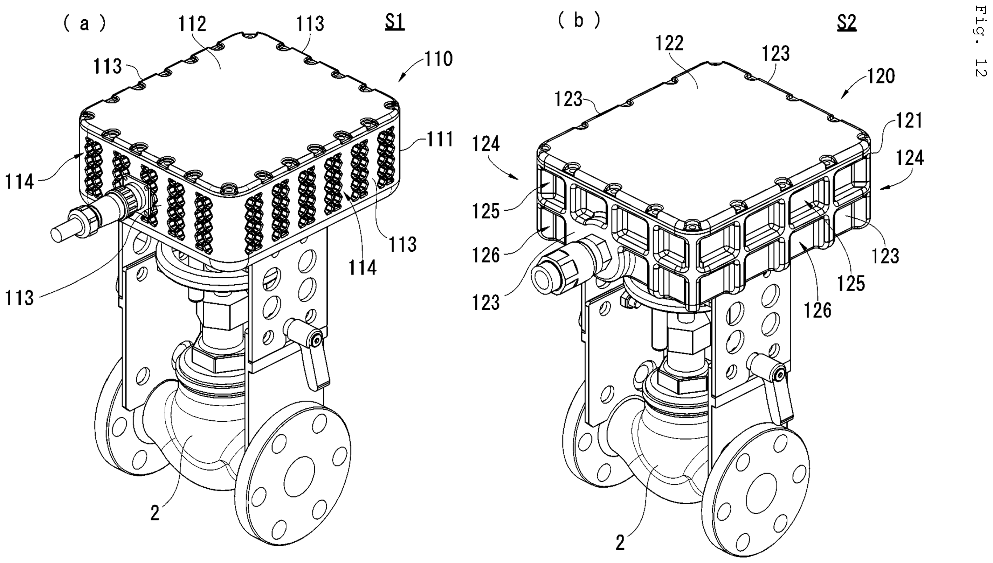

First, the present inventors manufactured a valve actuator S1 shown in FIG. 12(a) and a valve actuator S2 shown in FIG. 12(b) as flameproof explosion-proof valve actuators. The valve actuator S1 and the valve actuator S2 differ from a valve actuator 1 described later only in the shape of a side surface of an explosion-proof housing, and other members are common.

Here, the valve actuator S1 has an explosion-proof housing 110, houses an actuator driving portion (not shown) inside the explosion-proof housing 110, and constructs a flameproof explosion-proof structure (see FIG. 12(a)).

In addition, the explosion-proof housing 110 has a box-shaped main frame 111 serving as a body which houses the actuator driving portion, and a lid portion 112 which closes an upper side of the main frame 111 in a state in which the actuator driving portion is housed. In addition, the explosion-proof housing is formed of aluminum.

In addition, in four side surfaces 113 of the main frame 111, honeycomb-shaped thinning portions 114 are evenly formed on outer peripheral surfaces of the four side surfaces 113. In addition, the thinning portions 114 are formed as recessed portions which do not penetrate the side surfaces 113 along a thickness direction of the side surfaces 113.

The thinning portions 114 are portions which thin the side surfaces 113 and reduce the weight of the main frame 111 within a range in which pressure resistance strength of the explosion-proof housing 110 as the flameproof explosion-proof structure can be ensured. In addition, solid portions at outer edges defining the thinning portions 114 serve as ribs, and pressure resistance strength of the side surfaces 113 can be provided even when the side surfaces 113 are thinned and regions having a small thickness are formed.

In addition, although not shown, a plurality of recessed thinning portions which do not penetrate the bottom surface are formed in a bottom surface of the main frame 111 along a thickness direction of the bottom surface. The thinning portions in the bottom surface are also portions which reduce the weight of the main frame 111.

In the valve actuator S1, the explosion-proof housing 110 has pressure resistance strength which withstands an explosion pressure whose maximum explosion pressure inside the explosion-proof housing 110 is 0.811 MPa or less. In addition, the overall weight of the explosion-proof housing 110 is reduced, and the weight is such that deformation or breakage of a pipe can be sufficiently suppressed even when the valve actuator S1 is attached to a valve 2 provided on the pipe.

In addition, the valve actuator S2 has an explosion-proof housing 120, houses an actuator driving portion (not shown) inside the explosion-proof housing 120, and constructs a flameproof explosion-proof structure (see FIG. 12(b)).

The difference of the valve actuator S2 from the valve actuator S1 lies in the shapes of four side surfaces 123 in a main frame 121 of the explosion-proof housing 120, and other structures are common.

In addition, the explosion-proof housing 120 has a box-shaped main frame 121 and a lid portion 122. In addition, the explosion-proof housing is formed of aluminum.

In addition, in the four side surfaces 123 of the main frame 121, thinning portions 124 are evenly formed on outer peripheral surfaces of the four side surfaces 123. The thinning portions 124 are constituted by upper and lower combinations in which closed rectangular thinning portions 125 are provided in an upper stage on one side surface 123, and rectangular thinning portions 126 whose bottom surface side is notched are provided in a lower stage.

In addition, the thinning portions 125 and the thinning portions 126 are formed as recessed portions which do not penetrate the side surfaces 123 along a thickness direction of the side surfaces 123.

The thinning portions 125 and the thinning portions 126 are portions which thin the side surfaces 123 and reduce the weight of the main frame 121 within a range in which pressure resistance strength of the explosion-proof housing 120 as the flameproof explosion-proof structure can be ensured. In addition, solid portions at outer edges defining the thinning portions 125 and the thinning portions 126 serve as ribs, and pressure resistance strength of the side surfaces 123 can be provided even when the side surfaces 123 are thinned and regions having a small thickness are formed.

In addition, although not shown, a plurality of recessed thinning portions which do not penetrate the bottom surface are formed in a bottom surface of the main frame 121 along a thickness direction of the bottom surface, similarly to the valve actuator S1. The thinning portions in the bottom surface are also portions which reduce the weight of the main frame 121.

Also in the valve actuator S2, the explosion-proof housing 120 has pressure resistance strength which withstands an explosion pressure whose maximum explosion pressure inside the explosion-proof housing 120 is 0.811 MPa or less. In addition, the overall weight of the explosion-proof housing 120 is reduced, and the weight is such that deformation or breakage of a pipe can be sufficiently suppressed even when the valve actuator S2 is attached to a valve 2 provided on the pipe.

With such structures of the valve actuator S1 and the valve actuator S2, a structure can be constructed in which the explosion-proof housing 110 and the explosion-proof housing 120 are formed of aluminum, while the weight is kept small and pressure resistance strength as the flameproof explosion-proof structure can be ensured.

However, the structures of the explosion-proof housing 110 and the explosion-proof housing 120 had the following problems in consideration of mass-producing the explosion-proof housing 110 and the explosion-proof housing 120 at a product level.

That is, when attempting to manufacture the explosion-proof housing 110 and the explosion-proof housing 120 in large quantities from aluminum, casting using molds is employed. At this time, as described above, in order to form the honeycomb-shaped thinning portions 114 in the side surfaces 113 and the thinning portions in the bottom surface in the main frame 111, at least six molds corresponding to the side surfaces, the top surface, and the bottom surface of the main frame 111 are required.

Also with respect to the explosion-proof housing 120, in order to form the combination of the closed rectangular thinning portions 125 in the upper stage and the rectangular thinning portions 126 whose bottom surface side is notched in the lower stage in the side surfaces 123 of the main frame 121, and the thinning portions in the bottom surface, at least six molds corresponding to the side surfaces, the top surface, and the bottom surface of the main frame 121 are likewise required.

A shape which requires as many as six molds in this manner is a very special shape, and compared with a general mode in which manufacture is performed using only two molds, namely an upper mold and a lower mold, the cost for manufacturing the molds becomes very high, and the number of steps during casting also increases.

In addition, such high costs for manufacturing special molds and excessive numbers of steps when manufacturing using the special molds are also reflected in the price of a final product, and become a heavy burden for users who require large quantities of products for retrofitting and motorizing existing manual valves.

For this reason, the shapes of the main frame 111 and the main frame 121, which require six molds for casting, had a problem in that the shapes were difficult to adopt as shapes to be produced at a product level.

Thus, through the shapes of the valve actuator S1 and the valve actuator S2, the present inventors developed a flameproof explosion-proof valve actuator which has a flameproof explosion-proof structure, is compact and lightweight and is easy to manufacture since the flameproof explosion-proof valve actuator can be formed by matching two molds together.

Hereinafter, the valve actuator 1, which is an example of a flameproof explosion-proof valve actuator to which the present invention is applied, will be described. In the following example, a structure in which the valve actuator 1 is provided on the valve 2 is shown. That is, the valve actuator 1 functions as an actuator which opens and closes the valve 2.

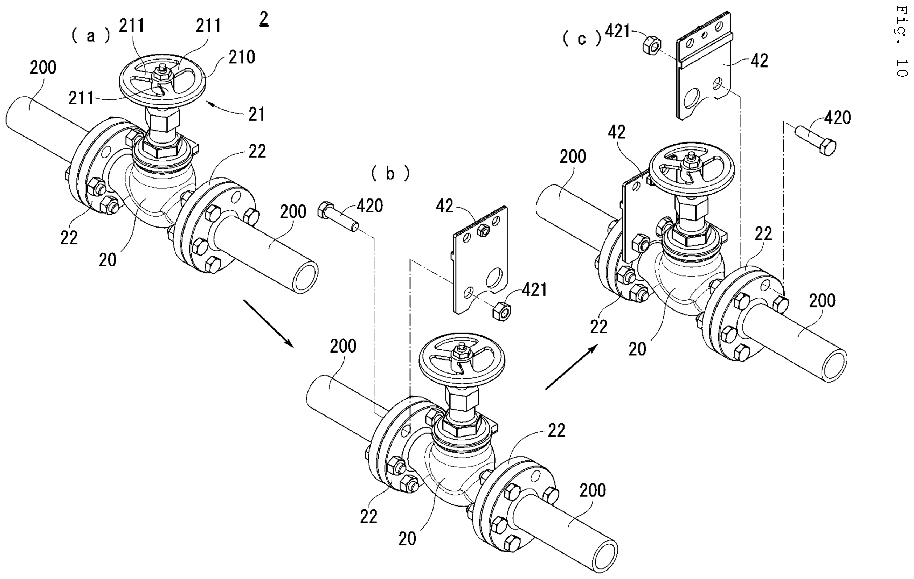

In addition, the valve 2 is installed in a pipe 200 (see FIG. 10(a)) provided under an explosive atmosphere in which hydrogen is contained in air, and is a device which controls or adjusts fluid flowing through the pipe. The explosive atmosphere here is, for example, an environment which is a mixed gas of hydrogen and air and in which hydrogen is contained at a ratio of 30%.

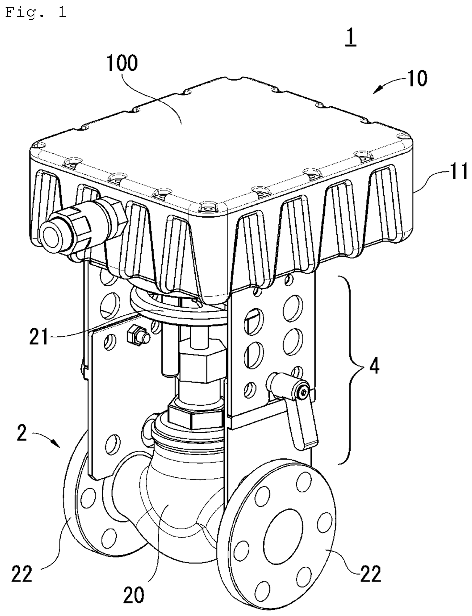

In addition, the valve 2 is a globe valve including a body 20, a handle 21, a valve rod (not shown), and a flange 22 (see FIG. 1 and FIG. 10(a)). In addition, the handle 21 has a frame portion 210 constituting an outer shape, and a plurality of spoke portions 211 which connect a center of the handle 21 and the frame portion 210 (see FIG. 10(a)). Since the structure of the valve 2 is the structure of a known globe valve, detailed description is omitted.

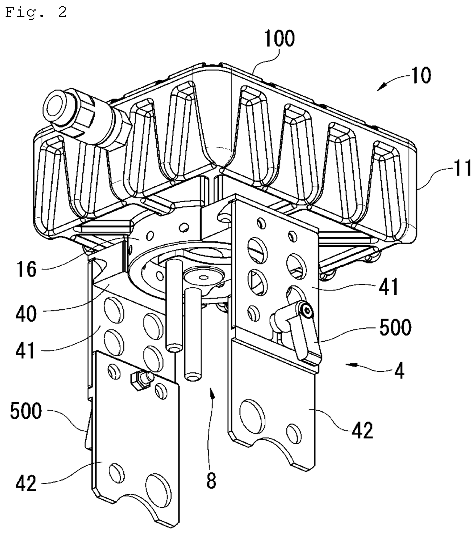

In addition, the valve actuator 1 has an explosion-proof housing 10 and a valve attaching portion 4 (see FIG. 1 and FIG. 2).

The explosion-proof housing 10 is a member which houses an actuator driving portion 3 described later therein, and has a flameproof explosion-proof structure. In addition, a detailed structure of the explosion-proof housing 10 will be described later.

In addition, the valve attaching portion 4 is a member which is fixed to the valve 2 and supports the explosion-proof housing 10. Details of a fixing structure of the valve attaching portion 4 to the valve 2 and a connection structure between the explosion-proof housing 10 and the valve attaching portion 4 will be described later.

Here, the type of valve to which the valve actuator 1 is attached is not particularly limited, and the valve actuator 1 can be attached as long as the valve has a rotation mechanism, such as a handle, for controlling fluid.

In addition, the handle 21 of the valve 2 is not necessarily limited to a handle having the frame portion 210 constituting the outer shape and the plurality of spoke portions 211 which connect the center of the handle 21 and the frame portion 210, and it is sufficient that the handle 21 is configured to fit with a bracket part 8 described later and to be capable of opening and closing the valve 2. For example, a shape having a plurality of spoke portions or a plate-shaped handle may be employed.

A detailed structure of the explosion-proof housing 10 will be described. The explosion-proof housing 10 has a main frame 11 serving as a body which houses the actuator driving portion 3, and a lid portion 100 which closes an upper side of the main frame 11 in a state in which the actuator driving portion is housed (see FIG. 1, FIG. 2, and FIGS. 4(a) to 4(c)). In addition, the explosion-proof housing 10 is formed of aluminum.

In addition, the explosion-proof housing 10 has pressure resistance strength which withstands an explosion pressure whose maximum explosion pressure inside the explosion-proof housing 10 is 0.811 MPa or less.

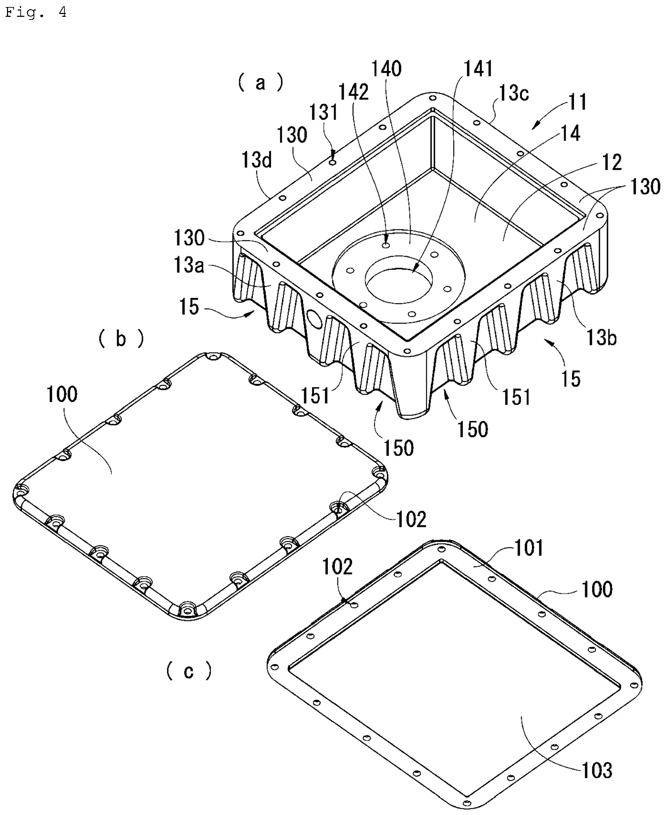

In addition, FIG. 4(a) shows the structure of the main frame 11 in a state before the actuator driving portion 3 is housed.

The main frame 11 has a box-like shape with an open upper portion, and includes an internal bottom plate 12 constituting an internal bottom surface, and four side plates 13a, 13b, 13c, and 13d surrounding four side edges of the internal bottom plate (see FIG. 4(a)).

In the main frame 11, a space surrounded by the internal bottom plate 12 and the four side plates 13a, 13b, 13c, and 13d serves as a space in which a gear case 30 of the actuator driving portion 3 described later is arranged.

In addition, a substantially donut-shaped stepped portion 140 recessed downward from a top surface 14 of the internal bottom plate 12, and a through-hole 141 which is located inside the stepped portion 140 and penetrates the internal bottom plate 12 in a thickness direction are formed in the internal bottom plate 12.

In addition, a plurality of bolt holes 142 are formed in the stepped portion 140. In addition, the internal bottom plate 12 is formed to have a thickness of 12 **mm.**

In addition, the stepped portion 140 is a portion which performs positioning when the gear case 30 of the actuator driving portion 3 is arranged. In addition, the through-hole 141 is a hole portion for arranging the bracket part 8 which is connected to and rotates with the actuator driving portion 3. A detailed structure relating to arrangement of the bracket part 8 will be described later. In addition, the bolt holes 142 are hole portions through which bolts for fixing the gear case 30 to the main frame 11 are inserted.

In addition, top surface portions of each of the four side plates 13a, 13b, 13c, and 13d are formed as substantially flat flange portions 130, and a thickness of the flange portions 130 is formed to be 18.5 mm. The thickness of the flange portions 130 corresponds to a portion serving as a maximum thickness of the four side plates 13a, 13b, 13c, and 13d.

The flange portions 130 are portions which are surface-joined to flange portions 101 (see FIG. 4(c)) formed in the lid portion 100. The thicknesses of the flange portions 130 and the flange portions 101 are designed in consideration of standards of the flameproof explosion-proof structure set according to the type of object explosive gas, an internal volume of the explosion-proof housing 10 having the flameproof explosion-proof structure, and the like, similarly to the detailed shape of the main frame 11 described later and the like.

Specifically, when explosive gas explodes inside the explosion-proof housing 10, the expanded explosive gas attempts to move from the inside of the explosion-proof housing 10 to the outside. The thicknesses of the flange portions 130 and the flange portions 101 are designed such that a distance over which the expanded explosive gas moves is a distance at which the temperature of the expanded explosive gas decreases to a temperature equal to or lower than an ignition point during movement.

In addition, a plurality of bolt holes 131 for fixing the lid portion 100 to the main frame 11 are formed in the flange portions 130 (see FIG. 4(a)).

In addition, FIG. 4(b) is a perspective view of the lid portion 100 as viewed from a top surface side, and FIG. 4(c) is a perspective view of the lid portion 100 as viewed from a bottom surface side. A plurality of bolt holes 102 corresponding to the above-described bolt holes 131 are formed in the lid portion 100.

In addition, on the bottom surface side of the lid portion 100, the flange portions 101 joined to the above-described flange portions 130 are formed on side edges of the lid portion 100 (see FIG. 4(c)). In addition, a bottom surface body 103 of the lid portion 100 is formed to have a thickness larger than a thickness of the flange portions 101. Accordingly, when the flange portions 130 and the flange portions 101 are joined, the bottom surface body 103 has a structure which closes the opening in the upper portion of the main frame 11.

In addition, the top surface 14 of the internal bottom plate 12 and inner peripheral surfaces of each of the four side plates 13a, 13b, 13c, and 13d are formed as flat surfaces (see FIG. 4(a)). Accordingly, when explosive gas enters the internal space of the main frame 11, excess spaces are eliminated from the top surface 14 and the inner peripheral surfaces of the side plates, and the amount of explosive gas which enters can be reduced.

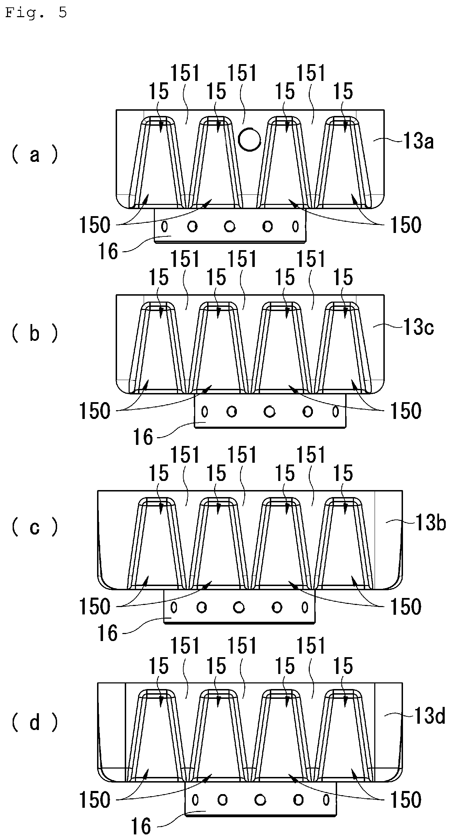

In addition, a plurality of side surface thinning portions 15 are formed on outer peripheral surfaces of each of the four side plates 13a, 13b, 13c, and 13d (see FIG. 4(a) and FIGS. 5(a) to 5(d)).

The side surface thinning portions 15 are portions for reducing the thicknesses of the four side plates 13a, 13b, 13c, and 13d and reducing weight.

In addition, the side surface thinning portions 15 are formed as recessed portions which do not penetrate the respective side plates along thickness directions of each of the four side plates 13a, 13b, 13c, and 13d. In addition, the side surface thinning portions 15 are formed in a substantially even arrangement in each of the four side plates 13a, 13b, 13c, and 13d.

In addition, the side surface thinning portions 15 have a shape in which notches 150 are formed on a bottom portion side and the side surface thinning portions 15 do not reach upper end edges of the respective side plates.

In addition, positions at which the notches 150 of the side surface thinning portions 15 are formed along an up-down direction are positions at which the internal bottom plate 12 is arranged.

In addition, the side surface thinning portions 15 are formed in a shape in which a width on the bottom portion side is largest in the up-down direction, and the width gradually decreases from the bottom portion side toward an upper side. In addition, regions having a large thickness, which define the side surface thinning portions 15, serve as rib portions 151.

In addition, regarding the thicknesses, a thickness of the rib portions 151 corresponding to the maximum thickness of the four side plates 13a, 13b, 13c, and 13d is 18.5 mm, and a thickness of portions where the thickness of the side surface thinning portions 15 is smallest is formed to be 5 mm.

Here, the numerical values of the thickness of the internal bottom plate 12, the thickness of the flange portions 130, the thickness of the rib portions 151, and the thickness of the side surface thinning portions 15 are examples, and can be appropriately set within a range in which a desired flameproof explosion-proof strength can be ensured.

In addition, since the notches 150 are formed on the bottom portion side of the side surface thinning portions 15, a range of thinned parts in which the thickness is reduced can be made large for the four side plates 13a, 13b, 13c, and 13d, and weight reduction can be efficiently achieved.

In addition, the side surface thinning portions 15 are formed in a shape in which, in the up-down direction, the width on the bottom portion side is largest and the width gradually decreases from the bottom portion side toward the upper side, and the positions at which the notches 150 of the side surface thinning portions 15 are formed are the positions at which the internal bottom plate 12 is arranged. Accordingly, a structure in which pressure resistance strength is balanced in the up-down direction is provided.

That is, along the up-down direction, on the upper side of each of the four side plates 13a, 13b, 13c, and 13d, the range occupied by the side surface thinning portions 15 becomes small, while the range occupied by the rib portions 151 having a large thickness becomes large, and therefore pressure resistance strength can be easily ensured.

In addition, along the up-down direction, on the bottom portion side of each of the four side plates 13a, 13b, 13c, and 13d, the width of the side surface thinning portions 15 becomes large and, since the notches 150 are formed, the range occupied by the side surface thinning portions 15 becomes large. However, the internal bottom plate 12 having a certain thickness is located inside each side plate. That is, even when the range in which the thickness is reduced becomes wide, pressure resistance strength corresponding to that range can be covered by the internal bottom plate 12.

Thus, according to the shape of the side surface thinning portions 15, pressure resistance strength can be ensured while reducing the weight of the four side plates 13a, 13b, 13c, and 13d. In addition, since the plurality of rib portions 151 are formed in each side plate, pressure resistance strength can also be increased.

In addition, with the shape of the side surface thinning portions 15, when the main frame 11 is manufactured, the main frame 11 can be cast merely by matching two molds together. That is, the shapes of the four side plates 13a, 13b, 13c, and 13d provided with the side surface thinning portions 15 can be manufactured by matching two molds together along the up-down direction.

According to this, since the main frame 11 can be produced in large quantities by casting merely by using two molds as the minimum required number, the manufacturing cost of the explosion-proof housing 10 can be reduced, and manufacturing with a small number of steps becomes possible.

In addition, the lid portion 100 can also be cast by matching two molds together. The casting step is a known technique, and various methods can be adopted. Although detailed description is omitted here, as one example, the explosion-proof housing 10 can be manufactured by aluminum die casting.

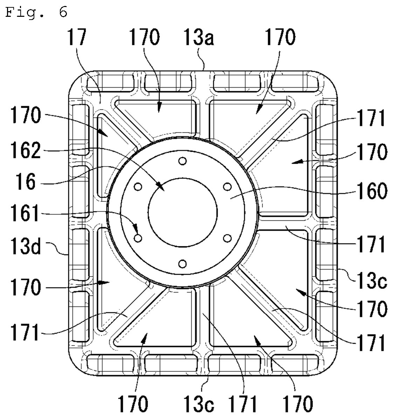

In addition, FIG. 6 shows a structure of the main frame 11 as viewed from the bottom surface side. On a bottom surface 17 of the main frame 11, a substantially cylindrical protruding portion 16 which extends downward along the up-down direction when the main frame 11 is viewed from a side surface side is formed (see FIG. 2, FIG. 6, and FIG. 8). The bottom surface 17 corresponds to the lower-side surface of the above-described internal bottom plate 12 (a surface exposed to the outside of the main frame 11).

The protruding portion 16 is a member which serves as a connection portion with the valve attaching portion 4. In addition, the protruding portion 16 is a portion which causes a lower-side structure of the bracket part 8 described later to protrude downward and outward from the main frame 11.

In addition, a mounting flange 160 and a through-hole 162 are formed in the protruding portion 16. In addition, a plurality of bolt holes 161 are formed in the mounting flange 160 (see FIG. 6).

In addition, the through-hole 162 of the protruding portion 16 communicates with the through-hole 141 of the internal bottom plate 12, and serves as a portion through which a lower cylindrical portion of the gear case 30 is inserted.

In addition, the mounting flange 160 is a portion for attaching the actuator driving portion 3 to the through-hole 162, and the gear case 30 is attached and fixed to the mounting flange 160 via bolts or the like (not shown) inserted through the bolt holes 161. In addition, the bracket part 8 is inserted through a lower through-hole of the gear case 30, and the bracket part 8 closes portions of the through-hole 162 other than a portion through which the gear case 30 is inserted.

In addition, a plurality of bottom surface thinning portions 170, which are formed to have a small thickness along the up-down direction, are formed in the bottom surface 17. In addition, bottom surface rib portions 171 having a large thickness are formed between the bottom surface thinning portions 170. That is, the plurality of bottom surface thinning portions 170 have a structure partitioned via the bottom surface rib portions 171. In addition, the bottom surface thinning portions 170 are formed to have a thickness of 5.5 **mm. In** addition, a thickness of the rib portions 171 is the same as a maximum thickness of the bottom surface 17 (12 mm, which is the thickness of the internal bottom plate).

In addition, the bottom surface rib portions 171 are formed to extend substantially radially, in a bottom view, from an outer edge of the protruding portion 16 as a starting point. Therefore, the bottom surface 17 has a shape in which the bottom surface thinning portions 170 and the bottom surface rib portions 171 are evenly arranged.

The plurality of bottom surface thinning portions 170 are portions for reducing the thickness of the bottom surface 17 and reducing weight. That is, the weight of the main frame 11 is also reduced by the bottom surface thinning portions 170. In addition, since the bottom surface thinning portions 170 are evenly arranged in the bottom surface 17, weight reduction can be efficiently achieved.

In addition, since the plurality of bottom surface rib portions 171 are formed, pressure resistance strength of the bottom surface 17 can be increased. In addition, since the bottom surface rib portions 171 are evenly arranged in the bottom surface 17, a structure in which pressure resistance strength is further increased is provided.

Here, the plurality of bottom surface thinning portions 170 do not necessarily need to be formed in the bottom surface 17. However, as described above, since the bottom surface 17 of the main frame 11 can also be reduced in weight while pressure resistance strength is ensured, the plurality of bottom surface thinning portions 170 are preferably formed in the bottom surface 17.

In addition, the numerical value of the thickness of the bottom surface thinning portions 170 is an example, and can be appropriately set within a range in which a desired flameproof explosion-proof strength can be ensured.

In addition, along the up-down direction, a direction in which the bottom surface thinning portions 170 are recessed and a direction in which the bottom surface rib portions 171 protrude have a relationship parallel to the direction in which the above-described side surface thinning portions 15 are formed along the up-down direction.

According to this, when the side surface thinning portions 15 are formed in the four side plates 13a, 13b, 13c, and 13d, the bottom surface 17 having the thinning portions 170 and the bottom surface rib portions 171 can be formed by casting in which two molds are matched together in the up-down direction.

That is, the main frame 11 is configured such that the shapes of the four side plates 13a, 13b, 13c, and 13d and the bottom surface 17 can be manufactured using two molds by one mold clamping. Accordingly, in the bottom surface 17, portions which are thinned by reducing the thickness can be formed using two molds with a small number of steps.

Next, the structure of the actuator driving portion 3 will be described.

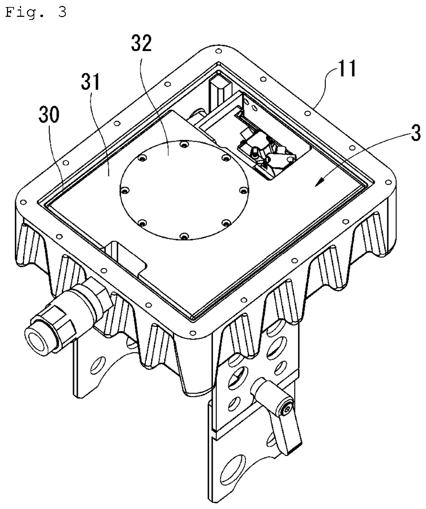

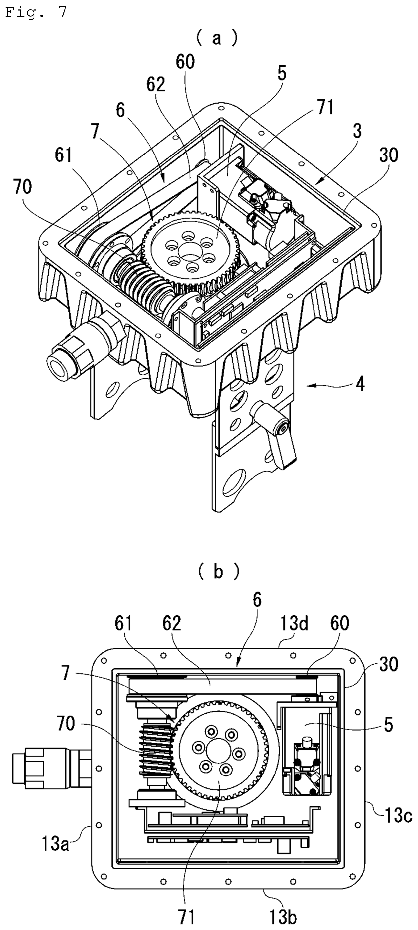

The actuator driving portion 3 has a gear case 30 (see FIG. 3 and FIGS. 7(a) and 7(b)), a motor 5, a belt transmission portion 6, and a worm reduction gear 7 (see FIGS. 7(a) and 7(b)). In addition, the actuator driving portion 3 has a servo driver and an operator portion (not shown).

In addition, the gear case 30 is an exterior member which houses, therein, main members constituting the actuator driving portion 3, such as the motor 5, the belt transmission portion 6, the worm reduction gear 7, the servo driver, and the operator portion. In FIGS. 7(a) and 7(b), in order to show the internal structure of the gear case 30, a state in which a top plate 31 of the gear case 30 and a gear cap 32 (see FIG. 3) are removed is illustrated.

In addition, a lower side of the gear case 30, together with the bracket part 8, is inserted through the through-hole 141 and the through-hole 162, and the lower side of the gear case 30 is formed to reach the protruding portion 16 along the up-down direction.

In addition, the motor 5 is a driving source in the actuator driving portion 3 for generating torque which rotates the handle 21 of the valve 2 via the bracket part 8. The motor 5 is constituted by a brushless motor, which is one of DC motors driven by direct current. In addition, the motor 5 has a rotary shaft (not shown).

In addition, the belt transmission portion 6 is a power transmission mechanism for transmitting power output from the motor 5 to the worm reduction gear 7. In addition, the belt transmission portion 6 is also a reduction mechanism which increases torque by reducing a rotation speed of power output from the motor 5 and transmits the power to the worm reduction gear 7. A power mechanism such as the belt transmission portion 6 is generally also referred to as a belt drive.

The belt transmission portion 6 has a small diameter pulley 60, a large diameter pulley 61, and a belt 62 (see FIGS. 7(a) and 7(b)). The small diameter pulley 60 is a member which is attached to the rotary shaft of the motor 5 and rotates integrally with the rotary shaft. In addition, the large diameter pulley 61 is a member which is attached to a worm portion 70 of the worm reduction gear 7 described later and rotates integrally with the worm portion 70.

In addition, the belt 62 is a belt member stretched over the small diameter pulley 60 and the large diameter pulley 61. Uneven portions formed on outer peripheral surfaces of the small diameter pulley 60 and the large diameter pulley 61 and uneven portions formed on an inner peripheral surface of the belt 62 fit together, and the small diameter pulley 60, the large diameter pulley 61, and the belt 62 are configured to rotate integrally.

Here, the configuration in which the uneven portions formed on the outer peripheral surfaces of the small diameter pulley 60 and the large diameter pulley 61 and the uneven portions formed on the inner peripheral surface of the belt 62 fit together, and the small diameter pulley 60, the large diameter pulley 61, and the belt 62 rotate integrally is not necessarily required. For example, the belt 62 may be configured to transmit power by a frictional force generated between the belt 62 and the small diameter pulley 60 or the large diameter pulley 61.

In this case, the small diameter pulley 60, the large diameter pulley 61, and the belt 62 can also be designed such that frictional forces generated between the respective members are adjusted, and when a large force equal to or greater than a certain level is applied and a transmission force becomes large, slippage occurs and power equal to or greater than a certain level cannot be transmitted. Accordingly, when a large force which may damage a valve sealing material (not shown) of the valve 2 is about to be applied, the belt 62 runs idle, whereby damage to the valve sealing material and a decrease in sealing performance can be suppressed.

In addition, a ratio between a diameter size of the small diameter pulley 60 and a diameter size of the large diameter pulley 61 is a ratio of small diameter pulley 60:large diameter pulley 61 = 1:2. In addition, the rotation speed of the motor 5 can be reduced according to the ratio between the diameter size of the small diameter pulley 60 and the diameter size of the large diameter pulley 61.

That is, from the ratio between the diameter sizes of the small diameter pulley 60 and the large diameter pulley 61, a reduction ratio of 1:2 can be obtained in the belt transmission portion 6. Torque output from the valve actuator 1 is defined according to the reduction ratio in the belt transmission portion 6 and the reduction ratio obtained from the worm reduction gear 7.

Here, a power transmission mechanism using a belt, such as the belt transmission portion 6, is generally not used in an actuator since transmission of high torque is difficult (the power transmission mechanism is not suitable for large power transmission).

However, in the actuator driving portion 3, as described later, since the motor 5 having an output of 100 W and a small size is used, power can be sufficiently transmitted by a power transmission mechanism using a belt, such as the belt transmission portion 6. As a result, the belt transmission portion 6 can transmit power to the worm reduction gear 7 while reducing the rotation speed of the power of the motor 5 and increasing torque.

In addition, the ratio between the diameter size of the small diameter pulley 60 and the diameter size of the large diameter pulley 61 is not necessarily limited to the ratio of small diameter pulley 60:large diameter pulley 61 = 1:2. However, in order to obtain a reduction ratio in the belt transmission portion 6, the diameter size of the large diameter pulley 61 is preferably larger than the diameter of the small diameter pulley 60. In addition, from the viewpoint of avoiding an increase in size of the belt transmission mechanism 6 and an increase in size of the actuator driving portion 3, in terms of diameter size, small diameter pulley 60:large diameter pulley 61 = 1:2 or less is preferable. In addition, from the viewpoint of achieving both size reduction of the belt transmission mechanism 6 and a high reduction ratio in the belt transmission portion 6, in terms of diameter size, small diameter pulley 60:large diameter pulley 61 = 1:2 is more preferable.

In addition, the motor 5 having an output of 100 W does not necessarily need to be adopted, and the value of the output is not limited as long as the actuator driving portion 3 can be reduced in size. For example, in the present invention, a motor having an output of 50 to 100 W can be used.

In addition, the worm reduction gear 7 is a reduction gear which increases torque by further reducing the rotation speed of the power transmitted from the belt transmission portion 6 and transmits the power to the bracket part 8. In addition, the worm reduction gear 7 has a reduction ratio of 1:50.

In addition, the worm reduction gear 7 has the worm portion 70 and a worm wheel 71 (see FIGS. 7(a) and 7(b)). Gear portions are provided in the worm portion 70 and the worm wheel 71, respectively (not shown). In addition, the worm wheel 71 is arranged with respect to the worm portion 70 such that respective rotation axes are orthogonal to each other, and is a member which performs power transmission by meshing of the respective gear portions.

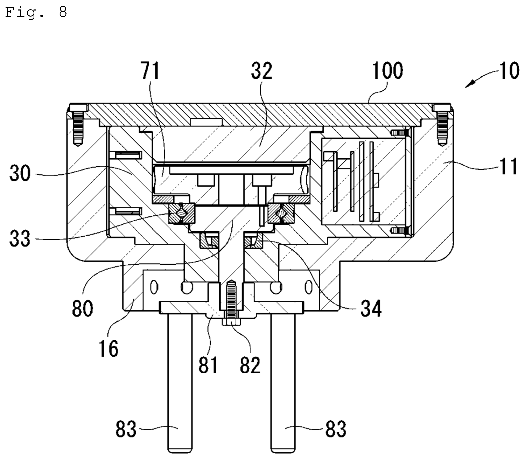

In addition, a lower portion of the worm wheel 71 is connected to the out shaft 80 constituting a part of the bracket part 8 described later (see FIG. 8). In addition, the worm wheel 71 and the out shaft 80 are configured to rotate integrally. As the structure of the worm reduction gear 7, a known wave gear reducer can be adopted, and description of the detailed structure is omitted.

Here, the worm reduction gear 7 is not necessarily limited to a worm reduction gear having a reduction ratio of 1:50, and a worm reduction gear having an appropriately changed reduction ratio can be used.

In addition, in the gear case 30, an angle formed by the rotary shaft of the motor 5 and the belt 62 and an angle formed by the belt 62 and the worm portion 70 are each arranged so as to be approximately 90 degrees in plan view. In addition, the worm wheel 71 is arranged so as to be surrounded by the rotary shaft of the motor 5, the belt 62, and the worm portion 70.

Accordingly, the respective members of the motor 5, the belt transmission portion 6, and the worm reduction gear 7 can be compactly accommodated within the limited range of the small gear case 30.

In addition, the bracket part 8 is a member which rotates the handle 21 of the valve 2 by the power transmitted from the worm reduction gear 7. That is, the bracket part 8 is a part which causes torque output from the actuator body 1 to act on the handle 21 of the valve **2.**

Subsequently, details of the bracket part 8 and a peripheral structure of the bracket part 8 will be described.

As shown in FIG. 8, the bracket part 8 has the out shaft 80 and a mounting plate 81. The out shaft 80 is a member whose upper end is connected to the lower portion of the worm wheel 71 and which rotates together with the worm wheel 71.

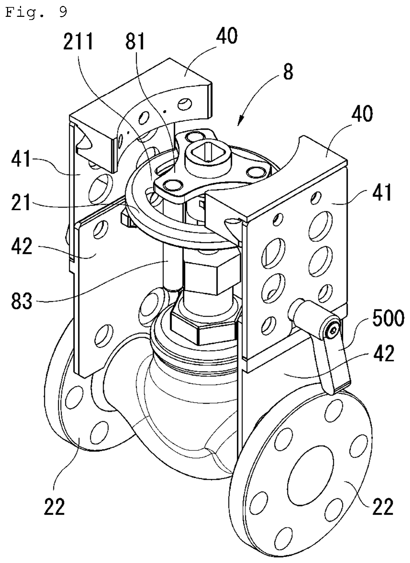

In addition, the mounting plate 81 is a member in which a plurality of spokes 83 are attached to a lower end of the mounting plate 81 and which transmits the rotational force of the out shaft 80 to the spokes 83 via the mounting plate 81 (see FIG. 8). In addition, the spokes 83 are members which fit with the handle 21 of the valve 2 (see FIG. 9).

In addition, a lower distal end portion of the out shaft 80 is formed in a tapered prismatic shape, and a recessed portion which fits with the prism is formed at a location in an upper portion of the mounting plate 81 which fits with the distal end portion of the out shaft 80 (reference sign omitted).

In addition, bolt holes are formed at a lower distal end of the out shaft 80 and a fitting location of the mounting plate 81, and the mounting plate 81 is fixed to the out shaft 80 by a bolt 82 attached from the lower side.

Accordingly, the rotational force of the rotating out shaft 80 is transmitted to the mounting plate 81, and the mounting plate 81 and the spokes 83 can be rotated.

In addition, a ring-shaped bearing 33 is provided on an outer peripheral edge on an upper side of the out shaft 80. In addition, a ring-shaped oil seal 34 is provided on an outer peripheral edge of an intermediate portion of the out shaft 80.

In addition, although not shown, a gasket is mounted at a boundary portion between the top surface 14 and the stepped portion 140 in the internal bottom plate 12 of the main frame 11.

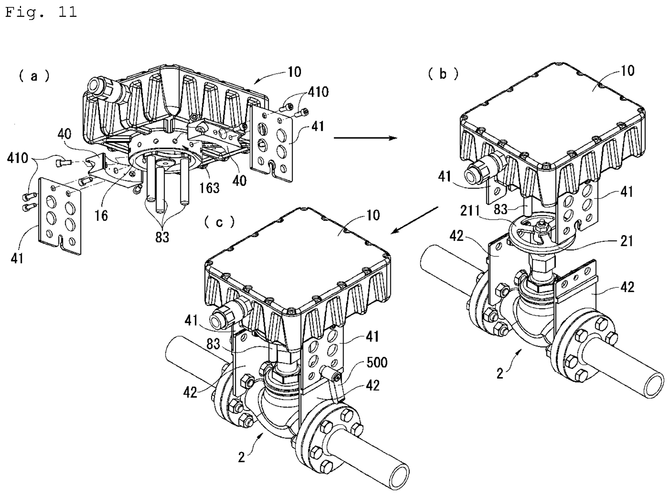

In addition, a plurality of spokes 83 of the bracket part 8 are formed in accordance with the number of spoke portions 211 of the handle 21 (see FIG. 11(a)).

In addition, the rotating spokes 83 contact the spoke portions 211 of the handle 21 (see FIG. 9), and as the rotation operation of the spokes 83 further proceeds, the handle 21 can be rotated. In FIG. 9, in order to clarify the positional relationship between the handle 21 and the spokes 83, structures above the mounting plate 81 of the bracket part 8 are omitted in the illustration.

In addition, a length in a longitudinal direction of each spoke 83 is formed to be equal to or longer than a stroke distance of the handle 21 which moves up and down due to opening and closing of the valve 2. Accordingly, when the handle 21 rotates, the handle 21 can be moved up and down within the range of the spokes 83 of the bracket part 8.

In this manner, the bracket part 8 has a structure in which the rotational force generated from the actuator driving portion 3 is transmitted to the handle 21 by the out shaft 80, the mounting plate 81, and the spokes 83 to open and close the valve **2.**

In addition, in the valve actuator 1 of the present invention, the total weight of the explosion-proof housing 10, the actuator driving portion 3, and the bracket part 8 combined is 10 kg or less. That is, the weight of the explosion-proof housing 10 and the like is sufficiently reduced, and breakage or deformation of the pipe 200 can be sufficiently suppressed even when the valve actuator 1 is attached to the valve 2 provided in the pipe 200.

### [Control Mechanism of Motor]

In addition, the motor 5 is connected to a control system (not shown), and driving of the motor 5 is controlled. Note that the system controlling the drive of the motor 5 is also connected to an absolute encoder (not shown). The absolute encoder is a member that is attached to the motor 5 and performs detection of the rotated position information in the motor 5 and position control with respect to the rotation operation of the motor **5.**

In addition, driving of the motor 5 is controlled by a control system constituted by a controller and a servo driver. The controller is a command unit which outputs an operation command signal to the servo driver.

In addition, the servo driver is a control unit which outputs a pulse signal to the motor 5 or controls output of the pulse signal so as to follow the command signal from the controller. Note that the servo driver 51 is a member corresponding to a motor driver in the claims of the present application.

In addition, the servo driver has a lower-level CPU and an upper-level CPU (not shown). In addition, the lower-level CPU is a member which transmits a pulse signal to the motor **5.** In addition, the lower-level CPU is a member which acquires position information of a rotational position of the motor 5 from the absolute encoder of the motor 5, and transmits, to the upper-level CPU, information of a result of determining whether the position information of the rotational position matches rotation information instructed by the upper-level CPU.

In addition, the upper-level CPU is a member which controls the lower-level CPU. The upper-level CPU is a member which determines a rotation speed and a rotational position of the motor 5 and transmits the rotation speed and the rotational position to the lower-level CPU as rotation information. In addition, the upper-level CPU is configured to enable communication control from outside the actuator driving portion 3.

In addition, the upper-level CPU is a member which acquires, from the lower-level CPU, position information of the rotational position of the motor 5 and information of a result of determining whether the position information of the rotational position matches rotation information instructed by the upper-level CPU. Furthermore, the upper-level CPU is a member which, based on information acquired from the lower-level CPU, determines correction control of the rotation when the position information of the rotational position of the motor 5 does not match an instructed rotational position (position information of a theoretical value).

In conventional valve actuators, a servo driver (driver CPU) has only the lower-level CPU in the present invention, and does not include a member corresponding to the upper-level CPU.

Therefore, in a conventional valve actuator, to provide an upper-level CPU in the servo driver and enable autonomous control by the valve actuator alone, as in the actuator driving portion 3 of the present invention, an additional main control board needs to be provided. When such a main control board is provided, the gear case 30 or the actuator driving portion 3 becomes large.

Accordingly, in the actuator driving portion 3, since the servo driver has the lower-level CPU and the upper-level CPU, the actuator driving portion 3 can be further reduced in size.

Subsequently, the structure of the valve attaching portion 4 will be described. As described above, the valve attaching portion 4 is a member which is fixed to the valve 2 and supports the explosion-proof housing 10.

The valve attaching portion 4 has an adapter 40, a mounting plate 41, a stand portion 42, and a clamp knob screw 500 (see FIG. 9).

In addition, the adapters 40, the mounting plates 41, the stand portions 42, and the clamp knob screws 500 are each arranged so that two are paired with the protruding portion 16 of the explosion-proof housing 10 as the center.

In addition, the adapter 40 is a member which fixes, to the protruding portion 16, a structure in which the mounting plate 41 and the stand portion 42 are integrated.

In addition, the adapter 40 is configured to be attachable and detachable with respect to a plurality of mounting holes 163 (see FIG. 11(a)) formed at constant intervals on an outer peripheral surface of the protruding portion 16 by selecting a position of the mounting holes. Accordingly, the orientation of the explosion-proof housing 10 can be rotated and adjusted to a desired orientation, and the protruding portion 16 can be fixed to the adapter 40.

As a result, the degree of freedom in the installation position of the explosion-proof housing 10 can be increased in accordance with the structure around the valve 2.

In addition, the mounting plate 41 is a member which connects the adapter 40 and the stand portion 42. In addition, the stand portion 42 is a member which fixes, to the flange 22 of the valve 2, a structure in which the adapter 40 and the mounting plate 41 are integrated (see FIG. 9).

In addition, the clamp knob screw 500 is a member which detachably fixes the mounting plate 41 and the stand portion 42. With the clamp knob screw 500, the clamp knob screw 500 can be attached to the mounting plate 41 and the stand portion 42, and the mounting plate 41 and the stand portion 42 can be easily fixed, without using a separate tool.

Hereinafter, a step of attaching the valve actuator 1 to the valve 2 using the valve attaching portion 4 will be described with reference to the drawings.

First, as shown in FIG. 10(a), the manual valve 2, which is an object to which the explosion-proof housing 10 is attached, is provided in the pipe 200.

As shown in FIG. 10(b), the stand 42 is attached to the flange 22 of the valve 2 via bolts 420 and nuts 421. One stand 42 can be fixed to the flange 22 with a set of a bolt 420 and a nut 421.

As shown in FIG. 10(c), the stand 42 is attached to the other flange 22 via bolts 420 and nuts 421. Through the flow up to this point, the work of fixing the stand 42 to the valve 2 is completed.

Next, as shown in FIG. 11(a), the adapter 40 and the mounting plate 41 are attached to the explosion-proof housing 10. As described above, the adapter 40 can be fixed to a plurality of mounting holes 160 formed at constant intervals on the outer peripheral surface of the protruding portion 16 by selecting a position of the mounting holes 40.

The outer peripheral surface of the protruding portion 16 is sandwiched and fixed from both sides by the adapters 40, and the adapter 40 and the mounting plate 41 are fixed via bolts 410. Through the flow up to this point, the work of fixing the adapter 40 and the mounting plate 41 to the explosion-proof housing 10 is completed.

Next, as shown in FIG. 11(b), the positions of the mounting plate 41 and the stand 42 and the positions of the spokes 83 of the bracket part 8 and the spoke portions 211 of the handle 21 are aligned, and the explosion-proof housing 10 is attached to the valve 2.

At this time, positions of connection locations of the mounting plate 41 and the stand 42 are aligned, and the clamp knob screw 500 is inserted so as to penetrate both members, and the mounting plate 41 and the stand 42 are fixed.

In the fixing with the clamp knob screw 500, the mounting plate 41 and the stand 42 can be fixed without using a separate tool or connecting member. In addition, since fixing can be performed by a simple operation of inserting the clamp knob screw 500 from the outer side of the mounting plate 41 toward the inner side, the clamp knob screw 500 can be easily attached even in a limited work space of a vessel.

Through the above flow, as shown in FIG. 11(c), attachment of the explosion-proof housing 10 to the valve 2 is completed. In this manner, by using the valve attaching portion 4, the valve actuator 1 can be arranged on the manual valve 2 through simple steps, and the valve 2 can be motorized.

The structure of the valve attaching portion 4 described above is merely one example of a structure which arranges the explosion-proof housing 10 on the valve 2 provided on the predetermined pipe 200, and the structure of the valve attaching portion 4 can be appropriately designed in accordance with shapes and arrangements of pipes and valves.

The actuator driving portion 3 and the motor 5 in the present invention can be manufactured, for example, with the following sizes.

First, in the actuator driving portion 3, in a case of a structure that can be driven by a DC power supply, the actuator driving portion 3 can be designed with a size of a height from an upper end of the handle 21 of the valve 2 to an upper end of the actuator driving portion 3 of 72 mm, a width of 157 mm, and a length of 170 mm. In addition, the height of only the gear case 30 of the actuator driving portion 3 can be designed with a size of 56 mm.

Regarding the motor 5, a size having a height and a width of 40 mm, a length of 95 mm, and an output of 100 W can be used. In addition, the servo driver 51 can be designed with a size having a width of 30 mm, a length of 80 mm, and a height of 14 mm. Note that this motor 5 can exhibit the same performance as a motor having a height of 80 mm, a width of 80 mm, a length of 116 mm, and an output of 400 W.

In this manner, the actuator driving portion 3 can control driving for opening and closing the valve 2 while being sufficiently compact. In addition, the valve actuator 1 is capable of autonomous control, and can control the rotation operation of the handle 21 with high precision without intervention of an operator's hand.

As described above, the actuator to which the present invention is applied can be easily attached to the manual valve, can motorize the valve, is sufficiently reduced in size so as to be arranged even in a narrow installation space, has excellent power transmission performance, and is capable of high-precision control.

### [Reference Signs List]

- 1: Valve actuator
- 2: Valve
- 20: Body
- 21: Handle
- 210: Frame portion
- 211: Spoke portion
- 22: Flange
- 200: Pipe
- 10: Explosion-proof housing
- 11: Main frame
- 100: Lid portion
- 101: Flange portion
- 102: Bolt hole
- 103: Bottom surface body
- 12: Internal bottom plate
- 13a: Side plate
- 13b: Side plate
- 13c: Side plate
- 13d: Side plate
- 130: Flange portion
- 131: Bolt hole
- 14: Top surface
- 140: Stepped portion
- 141: Through-hole
- 142: Bolt hole
- 15: Side surface thinning portion
- 150: Notch
- 151: Rib portion
- 16: Protruding portion
- 160: Mounting flange
- 161: Bolt hole
- 162: Through-hole
- 163: Mounting hole
- 17: Bottom surface
- 170: Bottom surface thinning portion
- 171: Bottom surface rib portion
- 3: Actuator driving portion
- 30: Gear case
- 31: Top plate
- 32: Gear cap
- 33: Bearing
- 34: Oil seal
- 4: Valve attaching portion
- 40: Adapter
- 41: Mounting plate
- 410: Bolt
- 42: Stand portion
- 420: Bolt
- 421: Nut
- 500: Clamp knob screw
- 5: Motor
- 6: Belt transmission portion
- 60: Small diameter pulley
- 61: Large diameter pulley
- 62: Belt
- 7: Worm reduction gear
- 70: Worm portion
- 71: Worm wheel
- 8: Bracket part
- 80: Out shaft
- 81: Mounting plate
- 82: Bolt
- 83: Spoke
- S1: Valve actuator
- 110: Explosion-proof housing
- 111: Main frame
- 112: Lid portion
- 113: Side surface
- 114: Thinning portion
- 2: Valve
- S2: Valve actuator
- 120: Explosion-proof housing
- 121: Main frame
- 122: Lid portion
- 123: Side surface
- 124: Thinning portion
- 125: Closed rectangular thinning portion
- 126: Rectangular thinning portion whose bottom surface side is notched
- 2: Valve

## Claims

1. A flameproof explosion-proof valve actuator comprising:
an actuator driving portion driven by electricity;
a bracket part which is attached to the actuator driving portion, is configured to be rotatable by a driving force of the actuator driving portion, and fits with a handle of a predetermined valve provided in a pipe to open and close the predetermined valve;
an explosion-proof housing which covers the actuator driving portion and at least a part of the bracket part, is formed of aluminum, and has a flameproof explosion-proof structure; and
a valve attaching portion which is attached to the predetermined valve and supports the explosion-proof housing above the handle,
wherein the explosion-proof housing has a housing body which can house the actuator driving portion therein, and a housing lid portion which is attached to a top surface side of the housing body in a state in which the actuator driving portion is housed inside the housing body,
wherein a plurality of side surface thinning portions, each of which has a thickness smaller than a thickness of a side surface of the housing body and has a shape in which only an end portion on a bottom portion side is notched, are formed in the side surface of the housing body, and
wherein an inner bottom portion of the housing body has a predetermined thickness.

2. The flameproof explosion-proof valve actuator according to Claim 1, wherein
a cylindrical protruding portion which protrudes downward from a bottom surface of the housing body and in which a through-hole communicating with the inside of the housing body is formed is provided on the bottom surface of the housing body, and a plurality of bottom surface thinning portions formed to have a thickness smaller than a thickness of the bottom surface are formed in the bottom surface around the protruding portion.

3. The flameproof explosion-proof valve actuator according to Claim 1 or Claim 2, wherein
the total weight of the actuator driving portion, the bracket part, and the explosion-proof housing is 10 kg or less.

4. The flameproof explosion-proof valve actuator according to Claim 1 or Claim 2, wherein
the side surface thinning portion is formed in a shape in which a lateral width of the side surface thinning portion gradually decreases from a bottom portion side toward an upper side in the side surface of the housing body.

5. The flameproof explosion-proof valve actuator according to Claim 1 or Claim 2, wherein
the plurality of side surface thinning portions are formed at constant intervals on at least one side surface of the housing body.

6. The flameproof explosion-proof valve actuator according to Claim 1 or Claim 2, wherein
the explosion-proof housing has strength which withstands an explosion pressure whose maximum explosion pressure inside the explosion-proof housing is 0.811 MPa or less.

7. The flameproof explosion-proof valve actuator according to Claim 2, wherein
the housing body has, on the bottom surface of the housing body, rib portions which partition the adjacent bottom surface thinning portions and are formed radially about the protruding portion as a center.

8. The flameproof explosion-proof valve actuator according to Claim 1 or Claim 2, wherein
the actuator driving portion has:
a case;
a motor which is arranged inside the case and serves as a driving source having a rotary shaft;
a first pulley attached to the rotary shaft;
a second pulley which is paired with the first pulley and has a diameter larger than a diameter of the first pulley;
a belt stretched over the first pulley and the second pulley; and
a worm reduction gear which has a worm portion to which the second pulley is attached and a worm wheel which is arranged orthogonally to the worm portion and performs power transmission by gear meshing with the worm portion, and which is arranged inside the case, and
wherein the bracket part is attached to the actuator driving portion.

9. A method for assembling a flameproof explosion-proof valve actuator, comprising:
a casting step of casting a housing body by matching a first mold and a second mold and pouring aluminum, the housing body being a box-shaped body capable of housing an actuator driving portion driven by electricity therein, and having, on a side surface of the housing body, a plurality of side surface thinning portions, each of which has a thickness smaller than a thickness of the side surface and has a shape in which only an end portion on a bottom portion side is notched;
a housing step of housing the actuator driving portion in the housing body cast in the casting step, and attaching a lid portion to a top surface of the housing body to construct an explosion-proof housing having a flameproof explosion-proof structure; and
an arrangement step of arranging, on a handle of a predetermined valve provided in a pipe, a bracket part which rotates by a driving force of the actuator driving portion, and arranging the explosion-proof housing above the handle via a valve attaching portion.

10. The method for assembling a flameproof explosion-proof valve actuator according to Claim 9, wherein
the predetermined valve is an existing valve provided in the pipe.
